# FASCICULE DE BREVET EUROPEEN

(11) **EP 2 783 987 B1**
(45) Date de publication et mention de la délivrance du brevet: **31.10.2018**
(21) Numéro de dépôt: 14000637.0
(22) Date de dépôt: 24.02.2014
(51) Int. Cl.: B64D 43/00, B64C 1/14, B64C 27/04, B64D 13/06

(54) **Aéronef muni d'un cockpit à visibilité extérieure optimisée, et procédé**
Luftfahrzeug, das mit einem Cockpit mit optimierter Sicht nach außen ausgestattet ist, und Verfahren
Aircraft provided with a cockpit having optimised outer visibility, and method

(30) Priorité: 26.03.2013 FR 1300699
(43) Date de publication de la demande: 01.10.2014
(73) Titulaire: Airbus Helicopters, 13725 Marignane Cedex (FR)
(72) Inventeur: Baudry, Jean-Pierre, F-83200 Toulon (FR); Certain, Nicolas, F-13090 AIX EN Provence (FR)
(74) Mandataire: GPI & Associés

(56) Documents cités:
- EP-A1- 0 064 351
- EP-A1- 2 361 832
- FR-A1- 2 585 823
- US-A1- 2003 127 557
- US-A1- 2004 172 896

## Description

La présente invention concerne un aéronef muni d'un cockpit à visibilité extérieure optimisée, et le procédé appliqué pour optimiser ladite visibilité extérieure d'un pilote.

L'invention se situe donc dans le domaine technique des cockpits d'aéronef, et plus particulièrement des giravions. Un cockpit est parfois dénommé « cabine de pilotage ».

En effet, un aéronef comporte usuellement une pluralité d'instruments fournissant des informations à un pilote. On peut trouver par exemple des instruments de navigation ou encore des instruments de surveillance d'une installation motrice.

Des giravions d'ancienne génération étaient essentiellement dédiés aux vols à vue. Ces giravions possédaient relativement peu d'instruments de bord agencés sur une planche de bord. Dans le cadre d'un cockpit comprenant deux sièges côte à côte séparés par un espace inter-sièges, la planche de bord était située dans une zone centrale du cockpit prolongeant l'espace inter-sièges. La visibilité vers l'avant d'un pilote était alors relativement bonne.

Des giravions de nouvelle génération permettent d'effectuer un vol aux instruments. Dès lors, ces giravions comprennent un nombre plus important d'instruments. Les planches de bord ont alors été allongées transversalement.

On connaît donc des giravions comprenant une planche de bord s'étendant de part et d'autre d'une zone centrale de manière à porter des instruments en vis-à-vis d'un pilote. La visibilité d'un pilote vers l'extérieur du cockpit dans l'axe d'avancement du giravion est alors obstruée, au moins partiellement, par cette planche de bord.

Pour autoriser un vol aux instruments et notamment indépendamment des conditions extérieures (météorologie dégradée, visibilité restreinte, ..), les giravions ont donc notamment du être équipés de nouveaux instruments, toujours plus nombreux, tendant à limiter la visibilité extérieure d'un pilote. Pourtant, la plupart du temps, l'aéronef vole dans des conditions de vol à vue.

Par suite, l'état de la technique comprend des aéronefs offrant une bonne visibilité extérieure mais un spectre de mission restreint, et des giravions offrant une visibilité extérieure moyenne mais un spectre de missions plus important.

Les documents US 3572615 et 3643899 présentent notamment un avion muni d'un tableau de bord et d'un coffre à instruments agencé au dessus du niveau des yeux d'un pilote pour ne pas obstruer son champ de vision.

Des instruments peuvent aussi être fixés sur un montant en élévation.

Le document US 2012/0217345 présente un cockpit comprenant une console centrale agencée dans le prolongement d'un espace inter-sièges. Le plancher du cockpit présente un moyen d'observation dans l'espace inter-siège pour offrir à un pilote un champ de vision vers le dessous de l'aéronef.

Le document GB 491358 présente un cockpit délimité notamment par une bulle transparente.

Le document FR2965248 présente une planche de bord.

Le document FR 2465641 est éloigné du domaine technique de l'invention. Ce document FR 2465641 présente en effet une timonerie d'un bateau équipée d'instruments qui sont fixés à un plafond.

En outre, on connaît le document EP 2 361 832 A1, qui est considéré comme l'art antérieur le plus proche et décrit les caractéristiques du préambule de la revendication 1.

Dans un premier temps, de multiples équipements (système de climatisation ...) positionnés traditionnellement dans le nez de l'aéronef, derrière les planches de bord classiques, ont été déplacés en cabine (soute). Grâce à cet effort, la visibilité extérieure potentielle a été augmentée. Cependant, des connexions potentiellement encombrantes et lourdes peuvent alors serpenter dans l'aéronef.

La présente invention a alors pour objet de proposer un aéronef muni d'un cockpit offrant une visibilité extérieure optimisée vers l'avant durant un vol à vue, tout en fournissant à un pilote des informations lors d'un vol aux instruments en minimisant l'impact des instruments sur ladite visibilité extérieure.

Selon l'invention, un aéronef est muni d'un cockpit s'étendant longitudinalement d'une partie arrière vers une partie avant ainsi que transversalement d'un côté gauche vers un côté droit et en élévation d'une base vers un sommet, le cockpit comprenant une verrière pourvue de surfaces transparentes fixées à des montants, le cockpit incluant un pupitre central et deux sièges disposés transversalement de part et d'autre du pupitre central.

L'aéronef est notamment remarquable en comportant au moins un support relié au pupitre central et au moins un moyen d'affichage pour afficher de multiples informations d'aide aux pilotage, chaque moyen d'affichage étant porté par au moins un support, chaque support étant interposé entre un montant et une position théorique de l'oeil d'un passager assis sur un desdits deux sièges, chaque support masquant visuellement au moins partiellement un montant (auquel il se superpose) pour optimiser la visibilité extérieure offerte à ce passager, la position théorique de l'oeil étant définie par le constructeur.

Par conséquent, la verrière de l'aéronef comporte des masques obturant le champ de vision d'un individu assis sur un des deux sièges avant du cockpit. Par exemple, le champ de vision d'un pilote, d'un copilote ou encore d'un opérateur tel qu'un médecin assis sur un siège avant est de fait obturé partiellement par les montants structuraux de la verrière.

De plus, le champ de vision d'un tel individu est aussi classiquement obturé par une planche de bord portant des instruments selon l'état de la technique.

En revanche, l'invention propose non pas d'agencer une planche de bord selon un tel état de la technique, mais propose d'agencer au moins un moyen d'affichage. Plus précisément, le cockpit peut comprendre un moyen d'affichage présentant des informations à un pilote, ou encore deux moyens d'affichages présentant respectivement des informations à un pilote et à un assistant tel qu'un copilote.

En outre, chaque moyen d'affichage est porté par au moins un support fixé au pupitre central directement ou indirectement par un organe de fixation. Un tel support est alors agencé selon une ligne de vision théorique d'un individu passant par un montant. Ainsi, le support est positionné de manière à ne pas ajouter un masque supplémentaire au champ de vision d'un pilote par exemple, en superposant le masque généré par le support sur le masque généré par un montant.

A cet effet, chaque support est positionné entre un montant et la position théorique d'un individu selon une ligne de vision reliant les yeux de l'individu à ce montant.

Notamment, l'aéronef comporte un siège qualifié de « siège droit » accueillant un premier individu du côté droit de l'aéronef, et un siège qualifié de « siège gauche » accueillant un deuxième individu du côté gauche de l'aéronef. Les termes « droit » et « gauche » sont à considérer en fonction du sens d'avancement de l'aéronef, le côté gauche étant situé à gauche d'un plan antéropostérieur pour un opérateur regardant vers l'avant de l'aéronef.

Dès lors, l'aéronef peut comporter au moins un support droit pour porter un moyen d'affichage droit afin d'afficher des informations destinées au premier individu, et au moins un support gauche pour porter un moyen d'affichage gauche pour afficher des informations destinées au deuxième individu.

Le support droit est alors par exemple positionné dans l'axe de vision du deuxième individu vers un montant situé du côté droit du cockpit pour minimiser l'impact des moyens de soutènement du moyen d'affichage gauche sur le champ de vision vers l'avant et vers la gauche de ce deuxième individu. De même, le support gauche peut être positionné dans l'axe de vision du premier individu vers un montant situé du côté gauche du cockpit.

Par suite, l'aéronef permet d'accroître le champ de vision vers la gauche pour un individu assis du côté droit de l'aéronef par rapport à certains états de la technique, et d'accroître le champ de vision vers la droite pour un individu assis du côté gauche de l'aéronef.

Ainsi, chaque moyen d'affichage peut présenter à un individu des informations nécessaires à un vol aux instruments tout en limitant les masques de vision générés par le système d'affichage pour faciliter les conditions de vol à vue.

Par exemple, le pilote agit parfois selon l'état de la technique sur le mouvement en lacet de l'aéronef afin de faire « déraper » cet aéronef pour pouvoir visualiser une aire d'atterrissage. L'augmentation du champ de vision offert par l'invention peut éviter une telle manoeuvre en octroyant un champ de vision supplémentaire par rapport à l'état de la technique.

En outre, les montants comprenant au moins un montant transversal s'étendant transversalement selon une direction allant du côté gauche vers le côté droit, l'aéronef comporte au moins un support transversal par moyen d'affichage masquant au moins partiellement un montant transversal.

L'aéronef peut donc comprendre un support qualifié de « transversal » et étant sensiblement horizontal. Chaque support transversal peut être superposé à un montant transversal de la verrière.

Selon l'invention, pour porter un moyen d'affichage par siège, l'aéronef possède un support transversal droit pouvant porter un moyen d'affichage droit dirigé vers le siège droit et un support transversal gauche pouvant porter un moyen d'affichage gauche dirigé vers le siège gauche.

Ainsi, l'aéronef comporte deux supports transversaux plans formant conjointement un plateau en forme de V, éventuellement horizontal.

Deux supports transversaux font alors partie d'un unique plateau en forme V, les deux supports transversaux représentant deux branches de ce plateau. Ces deux branches peuvent s'étendre transversalement de part et d'autre d'un plan antéropostérieur de symétrie.

Cette configuration permet notamment d'obtenir un support transversal relativement stable, malgré les vibrations subies durant un vol de l'aéronef.

Outre son aspect utilitaire, un tel plateau horizontal revêt un aspect esthétique très abouti.

Par ailleurs, l'aéronef peut comporter une ou plusieurs des caractéristiques qui suivent.

Cet aéronef peut comporter en effet au moins deux supports pour porter un moyen d'affichage par siège. Autrement dit, l'aéronef peut comporter au moins un support gauche pour porter un moyen d'affichage gauche, et au moins un support droit pour porter un moyen d'affichage droit.

En outre, l'aéronef comporte éventuellement un pied fixé au pupitre central, chaque support transversal étant porté par ledit pied.

L'aéronef comprend ainsi un pupitre central plus un système d'affichage incluant un organe de fixation et un moyen d'affichage, l'organe de fixation s'élevant en élévation à partir du pupitre central. L'organe de fixation inclut alors un pied et au moins un support reposant sur le pied.

Chaque support transversal est immobile par rapport au pied.

Un aéronef et notamment un giravion étant sujet à de multiples vibrations, cet agencement vise à minimiser l'effet des vibrations sur les moyens d'affichage.

Par ailleurs, les montants de la verrière comprenant au moins un montant en élévation s'étendant selon une direction allant de ladite base vers le sommet du cockpit, l'aéronef peut comporter au moins un support en élévation masquant au moins partiellement un montant en élévation.

Un montant en élévation peut être sensiblement vertical, oblique, ou encore courbe. Dès lors, un support portant un moyen d'affichage peut être superposé à un tel montant en élévation.

Ainsi, selon un premier mode de réalisation, un moyen d'affichage est porté par un support transversal.

Selon un deuxième mode de réalisation, un moyen d'affichage est porté par un support en élévation s'étendant à partir d'un pied ou du pupitre par exemple.

Selon un troisième mode de réalisation, un moyen d'affichage est porté par un support en élévation et un support transversal. Par exemple, le support en élévation s'étend obliquement d'un pied ou du pupitre central vers le moyen d'affichage voire vers le support transversal. Le système d'affichage présente alors une bonne stabilité pour tendre à éviter des mouvements intempestifs provoqués par des vibrations.

Le support en élévation représente en quelque sorte un renfort qui maintient en position un support transversal.

Par ailleurs et indépendamment du mode de réalisation, chaque moyen d'affichage peut être articulé à au moins un support par une articulation autorisant une rotation du moyen d'affichage autour d'un axe en élévation.

Cette articulation peut limiter l'angle de rotation d'un moyen d'affichage à une plage de 10 à 15 degrés pour superposer au mieux le moyen d'affichage à un montant transversal notamment.

En effet, cette plage restreinte permet de maintenir un coin supérieur du moyen d'affichage en superposition d'un montant.

Cet angle du moyen d'affichage peut aussi être fixe et intégré au moyen de fixation.

Cet angle judicieusement choisi peut être un compromis entre la minimisation du masquage de l'extérieur pour le pilote opposé et la présentation de l'information visualisé dans un plan approximativement perpendiculaire à l'axe de vision quand le pilote regarde le centre de la zone d'affichage.

En outre, l'aéronef peut comporter un moyen de fixation réversible par moyen d'affichage pour fixer temporairement un moyen d'affichage à un support.

Ainsi, l'aéronef peut comprendre un unique moyen d'affichage destiné à un pilote. Le deuxième moyen d'affichage peut être enlevé. Par exemple, durant une mission de secours en montagne, un pilote peut embarquer un médecin n'ayant pas besoin d'avoir accès à des informations de pilotage. Le pilote peut alors enlever le deuxième moyen d'affichage pour augmenter son champ de vision.

Le moyen de fixation peut être un moyen connu dénommé « dock » en langue anglaise permettant d'une part de fixer le moyen d'affichage à un support, et d'autre part de relier ce moyen d'affichage à des moyens de transmission d'informations et/ou d'électricité par exemple.

D'ailleurs, au moins un support peut être creux pour permettre le cheminement d'organes en son sein.

Ainsi, l'aéronef peut comporter des liaisons filaires cheminant dans au moins un support. Ces liaisons filaires peuvent inclure des liaisons d'alimentation électrique et/ ou des bus de données ou équivalent par exemple.

De plus ou en complément, l'aéronef peut comporter au moins un conduit d'air conditionné cheminant dans au moins un support.

En l'absence de système de climatisation, un aéronef peut être contraint de rester au sol par temps très froid, ou très chaud, car la température serait alors difficilement supportable en vol pour l'équipage. Le système de climatisation peut alors comprendre des conduits agencés dans les supports pour climatiser le cockpit.

Ainsi, au moins un support peut comporter au moins une buse de ventilation reliée à un conduit d'air conditionné.

De même ou en complément, au moins un moyen d'affichage peut comporter au moins une buse de ventilation reliée à un conduit d'air conditionné. Une telle buse de ventilation peut être disposée sur un côté latéral d'un moyen d'affichage afin que la conduite de climatisation ne présente pas un angle droit. Un tel angle droit tend en effet à dégrader les performances du système de climatisation.

Par ailleurs, le moyen d'affichage peut être agencé selon un axe de vision d'un pilote vers l'avant de l'aéronef pour répondre à certaines réglementations.

Toutefois, l'aéronef peut comprendre un organe d'affichage supplémentaire pouvant présenter les informations de pilotage requises dans de telles réglementations selon l'axe de vision spécifié.

Ainsi, le moyen d'affichage peut afficher des informations dites « de mission » telle que des informations de cartographie, l'organe d'affichage supplémentaire étant dédié aux informations de pilotage telles que l'altitude de l'aéronef par exemple. On se référera à la littérature pour identifier les informations de mission et de pilotage usuelles.

Un tel organe d'affichage peut comprendre un casque muni d'une visière présentant les informations requises.

Chaque moyen d'affichage peut alors être décalé par rapport à l'axe de vision vers l'avant d'un pilote pour optimiser son champ dé vision.

Cependant, au moins un support peut être extensible pour placer un moyen d'affichage dans une première position décalant latéralement le moyen d'affichage par rapport à un axe de vision vers l'avant d'un passager assis sur un des sièges ou bien dans une deuxième position positionnant le moyen d'affichage selon ledit axe de vision.

Ainsi, un pilote positionne le moyen d'affichage dans la première position lorsque l'aéronef comporte un organe d'affichage supplémentaire, et dans la deuxième position en l'absence de cet organe d'affichage.

Le moyen d'affichage peut présenter des informations de mission dans la première position et des informations de pilotage dans la deuxième position.

De plus, l'aéronef peut comporter au moins un instrument de bord agencé sur le pupitre central.

En outre, chaque moyen d'affichage peut comporter au moins deux écrans de visualisation indépendants, résultant d'une unique matrice ou d'une pluralité de matrices. Ainsi, la panne d'un écran peut être palliée par l'autre écran.

Outre un aéronef, l'invention, vise un procédé d'optimisation de la visibilité extérieure offerte à un passager d'un tel aéronef selon la revendication 17.

L'invention et ses avantages apparaîtront avec plus de détails dans le cadre de la description qui suit avec des exemples de réalisation donnés à titre illustratif en référence aux figures annexées qui représentent :
- les figures 1 à 3 un aéronef selon l'invention,
- les figures 4 à 5, un organe de fixation de moyens d'affichage muni de supports transversaux et en élévation,
- les figures 6 et 7, un tel organe de fixation agencé dans un cockpit, et
- la figure 8, un stéréogramme bâti avec un cockpit dépourvue de l'invention,
- la figure 9 un stéréogramme bâti avec le cockpit de la figure 6,
- la figure 10, un organe de fixation comportant uniquement un support en élévation par moyen d'affichage, et
- la figure 11, une vue d'un support extensible.

Les éléments présents dans plusieurs figures distinctes sont affectés d'une seule et même référence.

On note que trois directions X, Y et Z orthogonales les unes par rapport aux autres sont représentées sur certaines figures.

La première direction X est dite longitudinale. La deuxième direction Y est dite transversale. Enfin, la troisième direction Z est dite en élévation. L'expression « en élévation » est relative à toute direction parallèle à la troisième direction Z.

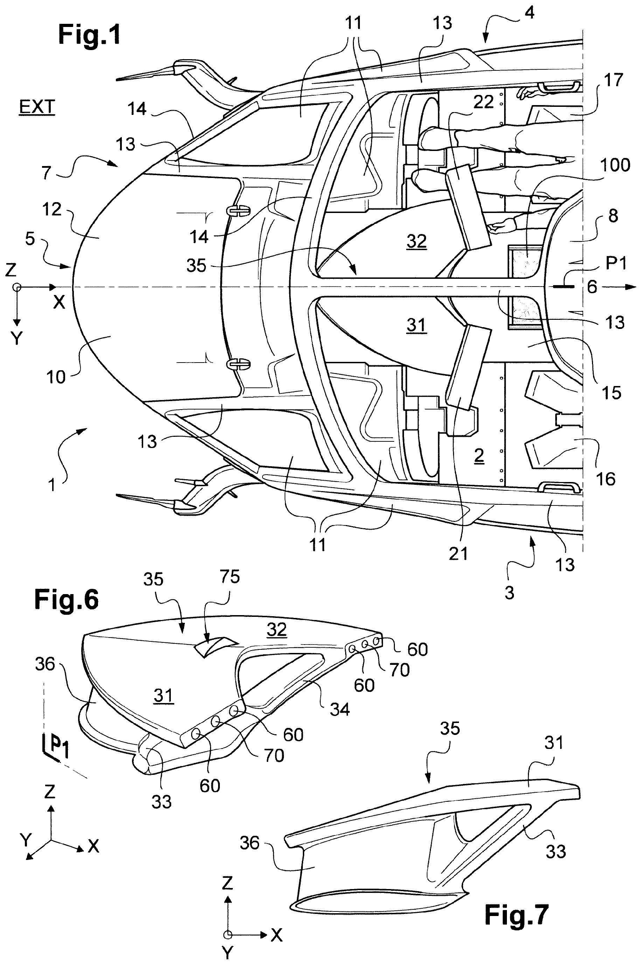

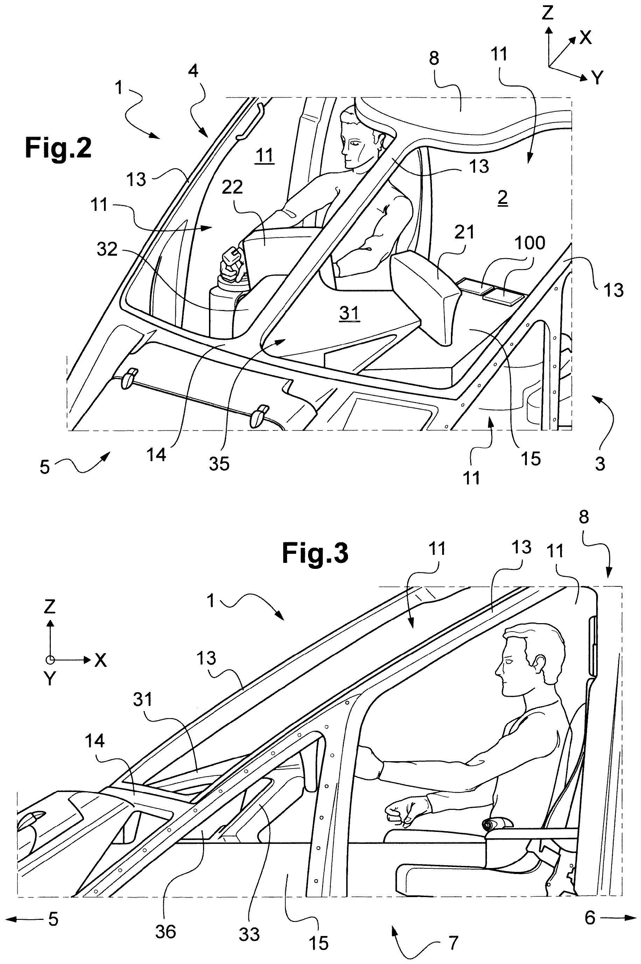

Les figures 1 à 3 présentent un aéronef 1 selon l'invention.

En référence à la figure 1, l'aéronef 1 comprend un cockpit 2. Le cockpit 2 s'étend selon la direction longitudinale X le long d'un plan antéropostérieur de symétrie P1 d'une partie avant 5 vers une partie arrière 6, selon la direction transversale Y d'un côté gauche 3 vers un côté droit 4, et selon la direction en élévation d'une base 7 vers un sommet 8.

Le cockpit 2 contient notamment deux sièges 16, 17, à savoir un siège avant gauche 16 et un siège avant droit 17 disposés respectivement du côté gauche 3 et du côté droit 4. Les sièges peuvent accueillir un pilote et un copilote, ou encore un pilote et un passager. Le passager peut par exemple être un médecin durant une mission de sauvetage.

Pour permettre aux individus assis sur les sièges 16, 17 de voir à l'extérieur EXT de l'aéronef, cet aéronef comprend une verrière 10.

La verrière est ainsi munie de surfaces transparentes 11 disposées notamment sur la partie avant, le côté gauche et le côté droit. On note qu'un nez 12 rigide et opaque peut protéger la pointe avant de l'aéronef. Cette pointe avant n'est par exemple pas équipée d'une verrière, pour protéger différents équipements électroniques placés en arrière de cette pointe avant, tel qu'un radar, une batterie, etc.

Les surfaces transparentes 11 sont fixées à des montants structuraux de l'aéronef. Les montants comprennent des montant dénommés « montant transversal 14» dans la mesure où ils s'étendent du côté gauche vers le côté droit. De plus, les montants comprennent des montant dénommés « montant en élévation 13 » dans la mesure où ils s'étendent de la base vers le sommet.

Par ailleurs, le cockpit 2 inclut un pupitre central 15 de commande s'étendant le long du plan antéropostérieur de symétrie P1, en passant notamment entre les deux sièges 16, 17. Ce pupitre central comprend par exemple au moins un instrument de bord 100.

Ces instruments de bord peuvent inclure des instruments d'affichage (écrans, ...) et des moyens de commande associés (track-ball, boîtiers de commandes réels ou virtuels, ...) relatifs à la gestion de mission (cartographie, météorologie...) et des instruments de gestion du véhicule (instrument relatif à la quantité de carburant, état des moteurs, système électrique, système hydraulique, ...).

Ces éléments de commandes, de visualisation d'états et de surveillance ou de visualisation d'informations peuvent être de type classique (boîtier de commandes, voyant d'état ou écran de visualisation dédiés pour chaque fonction) ou partiellement intégrés (type boîtier multifonction avec touches de menu). Dans une configuration plus novatrice l'ensemble des fonctions sont gérées par l'intermédiaire d'une ou plusieurs dalles tactiles où le comportement des modes et commandes et la visualisation des états des différents éléments du véhicule et des médiats de gestion de mission est le résultat d'un logiciel intégrant toutes ces fonctions.

De plus, l'aéronef comporte un système d'affichage pour présenter des informations d'aide au pilotage, de prise de conscience de la situation extérieure. Ces informations peuvent inclure des alertes, des alarmes, des informations de navigation, des informations de communication... Le mode d'affichage, peut être du type classique connu sous l'expression « Primary Flight Display » en langue anglaise, associé ou non à un affichage connu sous l'expression « Flight Navigation Display » en langue anglaise. L'affichage peut être novateur avec des images de type Synthétique Vision basées sur des données de terrain 3D.

Ce système d'affichage comprend au moins un moyen d'affichage 21, 22, et éventuellement un moyen d'affichage par siège. Ainsi, le système d'affichage peut comprendre un moyen d'affichage gauche 21 présentant des informations à un individu assis sur le siège gauche 16 et / ou un moyen d'affichage droit 22 présentant des informations à un individu assis sur le siège droit 17.

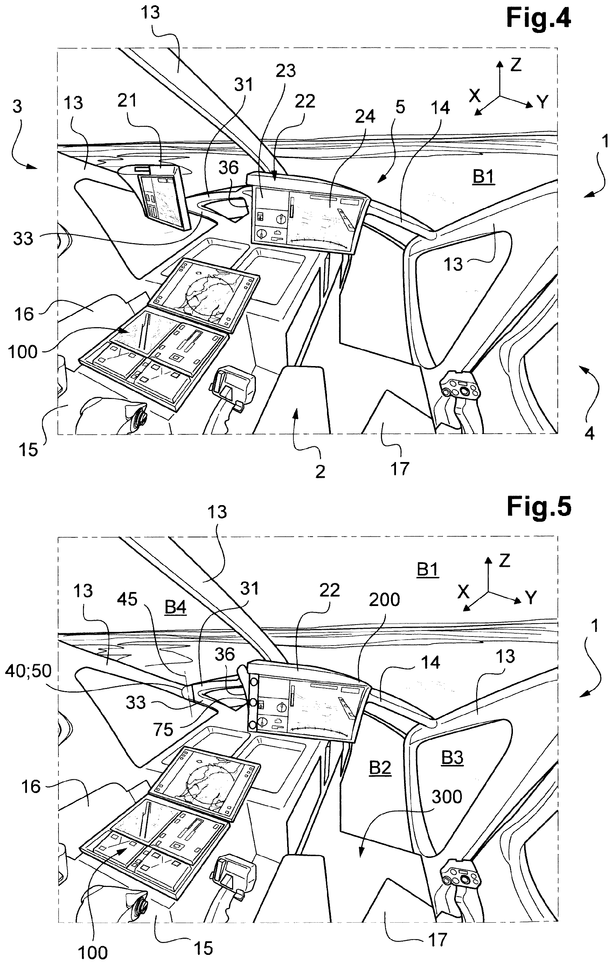

En référence à la figure 4, chaque moyen d'affichage peut comprendre par sécurité deux écrans indépendants 23, 24, éventuellement de dimensions identiques contrairement à la représentation de cette figure 4.

Chaque écran peut présenter une pluralité d'informations distinctes correspondant à divers instruments de l'état de la technique.

Pour porter les moyens d'affichage 21, 22, le système d'affichage comprend au moins un support 31, 33 relié au pupitre central 15. Chaque support est ainsi fixé au pupitre central 15 soit directement, soit indirectement par un pied fixé au pupitre central 15.

Selon le procédé appliqué, on suspend donc chaque moyen d'affichage à un support. De plus, on agence chaque support en l'interposant entre un montant 13, 14, et notamment un montant de la partie avant, et une position théorique de l'oeil d'un passager assis sur un desdits deux sièges. Une telle position théorique est fixée par le constructeur.

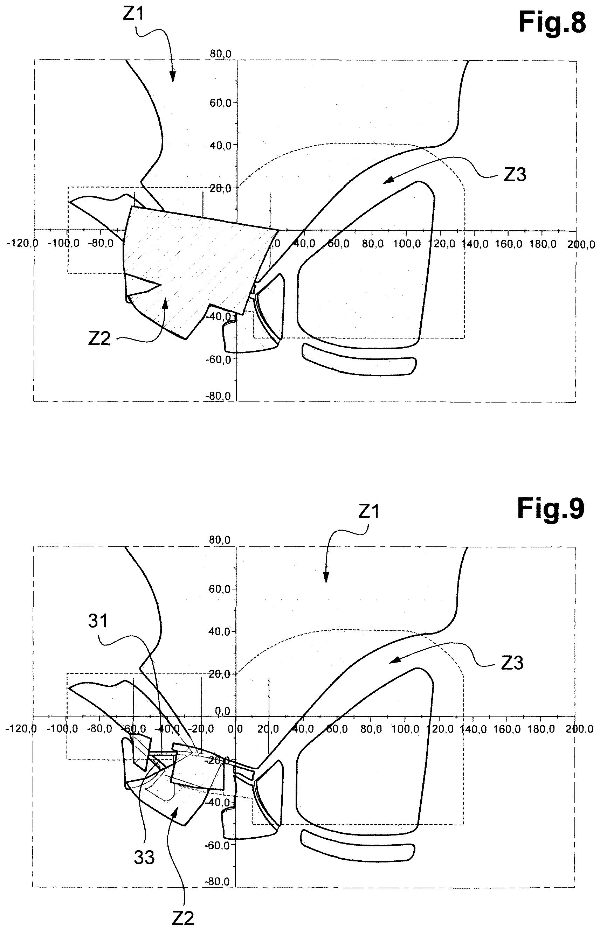

La figure 8 présente un stéréogramme montrant le champ de vision d'un pilote dans un aéronef muni d'une planche de bord classique.

La première zone Z1 coloriée représente le champ de vision offert à un pilote assis sur le siège avant droit. Ce champ de vision est obturé par la deuxième zone Z2 hachurée créée par le pupitre central et la planche de bord, et par la zone Z3 non coloriée créée par les montants de la verrière.

A l'inverse, la figure 9 présente un stéréogramme montrant le champ de vision d'un pilote dans un aéronef selon l'invention.

On constate que la zone Z2 est retreinte par rapport à l'état de la technique. De plus, le masque oculaire créé par les supports 31, 33 des moyens d'affichage est confondu avec un masque créé par des montants.

L'invention améliore donc sensiblement le champ de vision offert à un pilote.

Selon l'exemple de la figure 4, le système d'affichage comporte au moins deux supports 31, 33 par moyen d'affichage à porter.

Chaque moyen d'affichage est porté par le biais d'un support transversal 31 masquant partiellement un montant transversal 14, et par un support en élévation 33 masquant partiellement un montant en élévation.

En effet, cette figure 4 montre le cockpit vue par un pilote assis sur le siège avant droit. 17. Lorsque ce pilote regarde vers le côté opposé du cockpit à savoir le côté gauche, le support transversal 31 portant le moyen d'affichage gauche masque une portion d'un montant transversal 14. De plus, le support en élévation 33 portant aussi le moyen d'affichage gauche masque une portion d'un montant en élévation 13.

En référence aux figures 6 et 7, l'organe de fixation comporte alors deux supports transversaux 31, 32 plans formant conjointement un plateau 35 en forme de V.

Le plateau 35 est alors porté par un pied 36 à fixer au pupitre central 15. Un pied de section importante associé à un support transversal plan s'étendant de part et d'autre du pied tend à offrir une bonne stabilité au système de fixation.

L'organe de fixation peut ainsi uniquement comprendre un pied portant des supports transversaux.

Cependant, selon le mode de réalisation des figures 6 et 7, l'organe de fixation peut comporter un support en élévation 33, 34 par support transversal pour le rigidifier.

Chaque support en élévation peut alors s'étendre obliquement du pied vers l'extrémité d'un support transversal portant le moyen d'affichage.

A titre de variante, le support en élévation peut porter un moyen d'affichage, le support transversal s'étendant du pied vers le support en élévation.

A titre alternatif, le support transversal et le support en élévation peuvent conjointement être reliés à un moyen d'affichage.

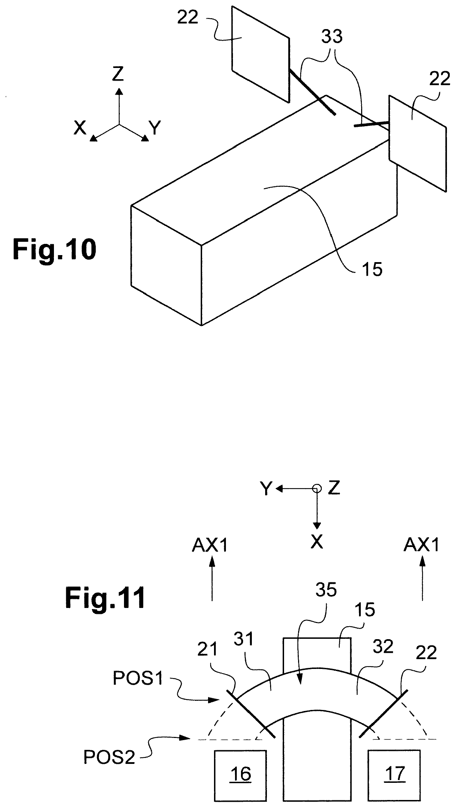

La figure 10 présente un mode de réalisation alternatif muni uniquement d'un support en élévation par moyen d'affichage.

Indépendamment du mode de réalisation et en référence à la figure 6, au moins un support et le cas échéant un pied peuvent être creux afin de guider en leur sein des liaisons filaires 60 et / ou au moins un conduit d'air conditionné 70.

D'ailleurs, au moins un support peut comporter au moins une buse de ventilation 75 reliée à un conduit d'air conditionné.

En référence à la figure 5, au moins un moyen d'affichage 22 peut aussi comporter au moins une buse de ventilation 75 reliée à un conduit d'air conditionné 70.

Par ailleurs, chaque moyen d'affichage peut être articulé à au moins un support par une articulation 40 schématisée sur la figure 5. L'articulation 40 autorise une rotation d'un moyen d'affichage autour d'un axe en élévation 45 sur une plage restreinte.

Cette plage permet par exemple de maintenir un coin 200 d'un moyen d'affichage superposé sur un montant. Par exemple, le coin supérieur droit du moyen d'affichage droit et le coin supérieur gauche sont superposés à un montant.

De plus, chaque moyen d'affichage peut être fixé de manière réversible à un support par un moyen de fixation 50.

Le moyen de fixation 50 peut être articulé par une articulation 40 à un support.

On note qu'en enlevant un moyen d'affichage, le champ de vision d'un pilote est augmenté de manière sensible.

Indépendamment de la présence d'un ou de deux moyens d'affichage, l'aéronef présente à un pilote une première zone B1 de vision vers l'avant de l'aéronef, une deuxième zone B2 de vision vers l'avant et vers le bas, une troisième zone B3 de vision latérale vers la droite, et une quatrième zone B4 de vision vers la gauche.

En outre, l'aéronef peut éventuellement posséder une zone de vision vers le bas offerte par exemple par un tapis de visualisation 300 affichant le milieu extérieur situé sous l'aéronef.

Par ailleurs, certains règlements peuvent requérir l'affichage des informations de mission selon un champ de vision vers l'avant.

L'aéronef peut alors comporter un casque ou tout autre moyen équivalent pour afficher de telles informations afin que le moyen d'affichage obture a minima la première zone B1.

Toutefois, il est possible d'agencer le moyen d'affichage dans la position requise par un tel règlement, en cas d'absence d'un tel casque.

Par suite, et en référence à la figure 11, au moins un support peut être extensible pour placer un moyen d'affichage 21, 22 soit dans une première position POS1 décalant latéralement le moyen d'affichage 21, 22 d'un axe de vision AX1 vers l'avant d'un passager, soit dans une deuxième position POS2 positionnant ledit moyen d'affichage 21, 22 selon ledit axe de vision AX1.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Aéronef (1) muni d'un cockpit (2) s'étendant longitudinalement d'une partie arrière (6) vers une partie avant (5) ainsi que transversalement d'un côté gauche (3) vers un côté droit (4) et en élévation d'une base (7) vers un sommet (8), ledit cockpit (2) comprenant une verrière (10) munie de surfaces transparentes (11) fixées à des montants (13, 14), ledit cockpit (2) incluant un pupitre central (15) et deux sièges (16, 17) disposés transversalement de part et d'autre du pupitre central (15),
l'aéronef (1) comporte au moins un support (31, 32, 33, 34) relié au pupitre central (15) et au moins un moyen d'affichage (21, 22) pour afficher de multiples informations d'aide aux pilotage, chaque moyen d'affichage (21, 22) étant porté par le au moins un support (31, 32, 33, 34), chaque support (31, 32, 33, 34) étant interposé entre un montant (13, 14) et une position théorique de l'oeil d'un passager assis sur un desdits deux sièges (16, 17), chaque support (31, 32, 33, 34) masquant visuellement au moins partiellement un desdits montants (13,14) pour optimiser la visibilité extérieure offerte à ce passager, la position théorique étant définie par le constructeur, **caractérisé en ce que** lesdits montants (13, 14) comprennent au moins un montant transversal (14) s'étendant transversalement selon une direction allant du côté gauche (3) vers le côté droit (4), ledit aéronef (1) comportant au moins un support transversal (31, 32) qui masque au moins partiellement ledit montant transversal (14), au moins deux supports transversaux (31, 32) plans formant conjointement un plateau (35) en forme de V.

2. Aéronef selon la revendication 1,
**caractérisé en ce que** ledit aéronef (1) comporte au moins deux supports (31, 32, 33, 34) pour porter un moyen d'affichage (21, 22) par siège (16, 17).

3. Aéronef selon l'une quelconque des revendications 1 à 2,
**caractérisé en ce que** ledit plateau (35) en forme de V est un plateau horizontal.

4. Aéronef selon l'une quelconque des revendications 1 à 3, **caractérisé en ce que** ledit aéronef (1) comporte un pied (36) fixé au pupitre central (15), chaque support transversal (31, 32) étant porté par ledit pied (36).

5. Aéronef selon la revendication 4,
**caractérisé en ce que** chaque support transversal (31, 32) est immobile par rapport au pied (36).

6. Aéronef selon l'une quelconque des revendications 1 à 5, **caractérisé en ce que** lesdits montants (13, 14) comprenant au moins un montant en élévation (13) s'étendant selon une direction allant de ladite base vers ledit sommet, ledit aéronef (1) comporte au moins un support en élévation (33, 34) masquant au moins partiellement un montant en élévation (13).

7. Aéronef selon l'une quelconque des revendications 1 à 6, **caractérisé en ce que** chaque moyen d'affichage (21, 22) est articulé à au moins un support (31, 32, 33, 34) par une articulation (40) autorisant une rotation du moyen d'affichage autour d'un axe en élévation (45).

8. Aéronef selon l'une quelconque des revendications 1 à 3, **caractérisé en ce que** ledit aéronef (1) comporte un moyen de fixation (50) réversible par moyen d'affichage (21, 22) pour fixer temporairement un moyen d'affichage (21, 22) à un support (31, 32, 33, 34).

9. Aéronef selon l'une quelconque des revendications 1 à 8,
**caractérisé en ce qu'**au moins un support (31, 32, 33, 34) est extensible pour placer un moyen d'affichage (21, 22) dans une première position (POS1) décalant latéralement ledit moyen d'affichage (21, 22) d'un axe de vision (AX1) vers l'avant d'un passager assis sur un desdits sièges ou bien dans une deuxième position (POS2) positionnant ledit moyen d'affichage (21, 22) selon ledit axe de vision (AX1).

10. Aéronef selon l'une quelconque des revendications 1 à 9,
**caractérisé en ce qu'**au moins un support est creux.

11. Aéronef selon la revendication 10,
**caractérisé en ce que** ledit aéronef comporte des liaisons filaires (60) cheminant dans au moins un support.

12. Aéronef selon l'une quelconque des revendications 10 à 11,
**caractérisé en ce que** ledit aéronef comporte au moins un conduit d'air conditionné (70) cheminant dans au moins un support.

13. Aéronef selon la revendication 12,
**caractérisé en ce qu'**au moins un support comporte au moins une buse de ventilation (75) reliée à un conduit d'air conditionné.

14. Aéronef selon l'une quelconque des revendications 12 à 13,
**caractérisé en ce qu'**au moins un moyen d'affichage (21, 22) comporte au moins une buse de ventilation (75) reliée à un conduit d'air conditionné (70).

15. Aéronef selon l'une quelconque des revendications 1 à 14,
**caractérisé en ce que** ledit aéronef (1) comporte au moins un instrument de bord (100) agencé sur le pupitre central (15).

16. Aéronef selon l'une quelconque des revendications 1 à 15,
**caractérisé en ce que** chaque moyen d'affichage (21, 22) comporte au moins deux écrans (23, 24) indépendants.

17. Procédé d'optimisation de la visibilité extérieure offerte à un passager d'un aéronef (1) muni d' un cockpit (2) s'étendant longitudinalement d'une partie arrière (6) vers une partie avant (5) ainsi que transversalement d'un côté gauche (3) vers un côté droit (4) et en élévation d'une base (7) vers un sommet (8), ledit cockpit (2) comprenant une verrière incluant des surfaces transparentes (11) reliées entre elles par des montants (13, 14), ledit cockpit (2) incluant un pupitre central (15) et deux sièges (16, 17) disposés transversalement de part et d'autre du pupitre central (15), lesdits montants (13, 14) comprenant au moins un montant transversal (14) s'étendant transversalement selon une direction allant du côté gauche (3) vers le côté droit (4),
**caractérisé en ce que** :
- on agence dans le cockpit (2) au moins un support (31, 32, 33, 34) relié au pupitre central (15) en interposant chaque support (31, 32, 33, 34) entre un desdits montants (13, 14) et une position théorique de l'oeil d'un passager assis sur un desdits deux sièges (16, 17) pour optimiser la visibilité extérieure offerte à ce passager, la position théorique étant définie par le constructeur, lesdits supports incluent au moins un support transversal (31, 32) masquant au moins partiellement ledit montant transversal (14), au moins deux supports transversaux (31, 32) plans formant conjointement un plateau (35) en forme de V,
- on suspend un moyen d'affichage (21, 22) à au moins un support (31, 32, 33, 34) pour afficher de multiples informations d'aide au pilotage.

## Patentansprüche

1. Luftfahrzeug (1), das mit einem Cockpit (2) ausgestattet ist, das sich in Längsrichtung von einem hinteren Teil (6) zu einem vorderen Teil (5) und in Querrichtung von einer linken Seite (3) zu einer rechten Seite (4) und in der Höhe von einer Basis (7) zu einem Scheitel (8) erstreckt, wobei das Cockpit (2) ein Kabinendach (10) aufweist, das mit transparenten Flächen (11) versehen ist, die an Pfosten (13, 14) befestigt sind, wobei das Cockpit (2) ein zentrales Bedienpult (15) und zwei Sitze (16, 17) aufweist, die auf jeder Seite des zentralen Bedienpults (15) quer angeordnet sind, das Luftfahrzeug (1) weist mindestens einen Träger (31, 32, 33, 34), der mit dem zentralen Bedienpult (15) verbunden ist, und mindestens ein Anzeigemittel (21, 22) auf, um verschiedene Informationen zur Flughilfe anzuzeigen, wobei jedes Anzeigemittel (21, 22) von dem mindestens einen Träger (31, 32, 33, 34) getragen ist, wobei jeder Träger (31, 32, 33, 34) zwischen einem Pfosten (13, 14) und einer theoretischen Position des Auges eines Fluggastes angeordnet ist, der auf einem der zwei Sitze (16, 17) sitzt, wobei jeder Träger (31, 32, 33, 34) visuell mindestens teilweise einen der Pfosten (13, 14) verdeckt, um die Sicht nach außen, die diesem Fluggast geboten wird, zu optimieren, wobei die theoretische Position von dem Hersteller definiert wird, **dadurch gekennzeichnet, dass** die Pfosten (13, 14) mindestens eine Querstrebe (14) aufweisen, die sich quer in einer Richtung erstreckt, die von der linken Seite (3) zu der rechten Seite (4) verläuft, wobei das Luftfahrzeug (1) mindestens einen Querträger (31, 32) aufweist, der mindestens teilweise die Querstrebe (14) verdeckt, wobei mindestens zwei ebene Querträger (31, 32) zusammen eine V-förmige Platte (35) bilden.

2. Luftfahrzeug nach Anspruch 1, **dadurch gekennzeichnet, dass** das Luftfahrzeug (1) mindestens zwei Träger (31, 32, 33, 34) aufweist, um ein Anzeigemittel (21, 22) pro Sitz (16, 17) zu tragen.

3. Luftfahrzeug nach einem der Ansprüche 1 bis 2, **dadurch gekennzeichnet, dass** die V-förmige Platte (35) eine horizontale Platte ist.

4. Luftfahrzeug nach einem der Ansprüche 1 bis 3, **dadurch gekennzeichnet, dass** das Luftfahrzeug (1) einen Fuß (36) aufweist, der an dem zentralen Bedienpult (15) befestigt ist, wobei jeder Querträger (32, 32) von dem Fuß (36) getragen ist.

5. Luftfahrzeug nach Anspruch 4, **dadurch gekennzeichnet, dass** jeder Querträger (32, 32) gegenüber dem Fuß (36) unbeweglich ist.

6. Luftfahrzeug nach einem der Ansprüche 1 bis 5, **dadurch gekennzeichnet, dass** die Pfosten (13, 14) mindestens einen Pfosten in die Höhe (13) aufweisen, der sich in einer Richtung erstreckt, die von der Basis zu dem Scheitel verläuft, wobei das Luftfahrzeug (1) mindestens einen Träger in die Höhe (33, 34) aufweist, der mindestens teilweise einen Pfosten in die Höhe (13) versteckt.

7. Luftfahrzeug nach einem der Ansprüche 1 bis 6, **dadurch gekennzeichnet, dass** jedes Anzeigemittel (21, 22) mit mindestens einem Träger (31, 32, 33, 34) durch ein Gelenk (40) gelenkig verbunden ist, das eine Drehung des Anzeigemittels um eine Höhenachse (45) ermöglicht.

8. Luftfahrzeug nach einem der Ansprüche 1 bis 3, **dadurch gekennzeichnet, dass** das Luftfahrzeug (1) ein reversibles Befestigungsmittel (50) pro Anzeigemittel (21, 22) aufweist, um vorübergehend ein Anzeigemittel (21, 22) an einem Träger (31, 32, 33, 34) zu befestigen.

9. Luftfahrzeug nach einem der Ansprüche 1 bis 8, **dadurch gekennzeichnet, dass** mindestens ein Träger (31, 32, 33, 34) ausziehbar ist, um ein Anzeigemittel (21, 22) in eine erste Position (POS1), indem das Anzeigemittel (21, 22) von einer Sichtachse (AX1) in Richtung der Vorderseite eines Fluggastes, der auf einem der Sitze sitzt, seitlich versetzt wird, oder in eine zweite Position (POS2) zu positionieren, indem die Anzeigevorrichtung (21, 22) entlang der Sichtachse (AX1) positioniert wird.

10. Luftfahrzeug nach einem der Ansprüche 1 bis 9, **dadurch gekennzeichnet, dass** mindestens ein Träger hohl ist.

11. Luftfahrzeug nach Anspruch 10, **dadurch gekennzeichnet, dass** das Luftfahrzeug drahtgebundene Verbindungen aufweist, die in mindestens einem Träger verlaufen.

12. Luftfahrzeug nach einem der Ansprüche 10 bis 11, **dadurch gekennzeichnet, dass** das Luftfahrzeug mindestens eine Klimaanlagenleitung (70) aufweist, die in mindestens einem Träger verläuft.

13. Luftfahrzeug nach Anspruch 12, **dadurch gekennzeichnet, dass** mindestens ein Träger mindestens eine Belüftungsdüse (75) aufweist, die mit einer Klimaanlagenleitung verbunden ist.

14. Luftfahrzeug nach einem der Ansprüche 12 bis 13, **dadurch gekennzeichnet, dass** mindestens ein Anzeigemittel (21, 22) mindestens eine Belüftungsdüse (75) aufweist, die mit einer Klimaanlagenleitung verbunden (70) ist.

15. Luftfahrzeug nach einem der Ansprüche 1 bis 14, **dadurch gekennzeichnet, dass** das Luftfahrzeug (1) mindestens ein Bordinstrument (100) aufweist, das auf dem zentralen Bedienpult (15) angeordnet ist.

16. Luftfahrzeug nach einem der Ansprüche 1 bis 15, **dadurch gekennzeichnet, dass** jedes Anzeigemittel (21, 22) mindestens zwei unabhängige Bildschirme (23, 24) aufweist.

17. Verfahren zum Optimieren der Sicht nach außen, die einem Fluggast eines Luftfahrzeugs (1) geboten wird, das mit einem Cockpit (2) ausgestattet ist, das sich in Längsrichtung von einem hinteren Teil (6) zu einem vorderen Teil (5) und in Querrichtung von einer linken Seite (3) zu einer rechten Seite (4) und in der Höhe von einer Basis (7) zu einem Scheitel (8) erstreckt, wobei das Cockpit (2) ein Kabinendach aufweist, das mit transparenten Flächen (11) versehen ist, die an Pfosten (13, 14) befestigt sind, wobei das Cockpit (2) ein zentrales Bedienpult (15) und zwei Sitze (16, 17) aufweist, die auf jeder Seite des zentralen Bedienpults (15) quer angeordnet sind, wobei die Pfosten (13, 14) mindestens eine Querstrebe (14) aufweisen, die sich quer in einer Richtung erstreckt, die von der linken Seite (3) zu der rechten Seite (4) verläuft, **dadurch gekennzeichnet, dass**:
- in dem Cockpit (2) mindestens ein Träger (31, 32, 33, 34) angeordnet wird, der mit dem zentralen Bedienpult (15) verbunden ist, indem jeder Träger (31, 32, 33, 34) zwischen einem der Pfosten (13, 14) und einer theoretischen Position des Auges eines Fluggastes angeordnet wird, der auf einem der zwei Sitze (16, 17) sitzt, um die Sicht nach außen, die diesem Fluggast geboten wird, zu optimieren, wobei die theoretische Position von dem Hersteller definiert wird, die Träger mindestens einen Querträger (31, 32) umfassen, der mindestens teilweise die Querstrebe (14) verdeckt, wobei mindestens zwei ebene Querträger (31, 32) zusammen eine V-förmige Platte (35) bilden,
- ein Anzeigemittel (21, 22) an mindestens einen Träger (31, 32, 33, 34) gehängt wird, um verschiedene Informationen zur Flughilfe anzuzeigen.

## Claims

1. Aircraft (1) provided with a cockpit (2) extending longitudinally from a rear portion (6) to a front portion (5) and transversely from a left side (3) to a right side (4) and in elevation from a base (7) to a top (8), said cockpit (2) comprising a canopy (10) provided with transparent surfaces (11) attached to posts (13, 14), said cockpit (2) including a central control pedestal (15) and two seats (16, 17) arranged transversely on either side of the central control pedestal (15), the aircraft (1) comprises at least one support member (31, 32, 33, 34) connected to the central control pedestal (15) and at least one display means (21, 22) for displaying various information to aid piloting, each display means (21, 22) being supported by the at least one support member (31, 32, 33, 34), each support member (31, 32, 33, 34) being positioned between a post (13, 14) and a theoretical position of the eye of a passenger sitting on one of said two seats (16, 17), each support member (31, 32, 33, 34) at least partially concealing one of said posts (13, 14) from view in order to optimise the outer visibility offered to this passenger, the theoretical position being defined by the manufacturer, **characterised in that** said posts (13, 14) comprise at least one transverse post (14) extending transversely in a direction from the left side (3) to the right side (4), said aircraft (1) comprising at least one transverse support member (31, 32) which at least partially conceals said transverse post (14), at least two planar transverse support members (31, 32) jointly forming a V-shaped plate (35).

2. Aircraft according to Claim 1, **characterised in that** said aircraft (1) comprises at least two support members (31, 32, 33, 34) for supporting one display means (21, 22) per seat (16, 17).

3. Aircraft according to either of Claims 1 or 2, **characterised in that** said V-shaped plate (35) is a horizontal plate.

4. Aircraft according to any one of Claims 1 to 3, **characterised in that** said aircraft (1) comprises a leg (36) attached to the central control pedestal (15), each transverse support member (31, 32) being supported by said leg (36).

5. Aircraft according to Claim 4, **characterised in that** each transverse support member (31, 32) is stationary relative to the leg (36).

6. Aircraft according to any one of Claims 1 to 5, **characterised in that** said posts (13, 14) comprising at least one post in elevation (13) extending in a direction from said base to said top, said aircraft (1) comprises at least one support member in elevation (33, 34) at least partially concealing one post in elevation (13).

7. Aircraft according to any one of Claims 1 to 6, **characterised in that** each display means (21, 22) is hinged to at least one support member (31, 32, 33, 34) by a hinge (40) allowing rotation of the display means about an axis (45) in elevation.

8. Aircraft according to any one of Claims 1 to 3, **characterised in that** said aircraft (1) comprises one reversible attachment means (50) per display means (21, 22) for temporarily attaching a display means (21, 22) to a support member (31, 32, 33, 34).

9. Aircraft according to any one of Claims 1 to 8, **characterised in that** at least one support member (31, 32, 33, 34) is extendable in order for a display means (21, 22) to be placed in a first position (POS1) laterally offsetting said display means (21, 22) from a line of sight (AX1) towards the front of a passenger sitting on one of said seats or in a second position (POS2) positioning said display means (21, 22) along said line of sight (AX1).

10. Aircraft according to any one of Claims 1 to 9, **characterised in that** at least one support member is hollow.

11. Aircraft according to Claim 10, **characterised in that** said aircraft comprises wired connections (60) laid in at least one support member.

12. Aircraft according to either of Claims 10 or 11, **characterised in that** said aircraft comprises at least one air conditioning duct (70) laid in at least one support member.

13. Aircraft according to Claim 12, **characterised in that** at least one support member comprises at least one ventilation nozzle (75) connected to an air conditioning duct.

14. Aircraft according to either of Claims 12 or 13, **characterised in that** at least one display means (21, 22) comprises at least one ventilation nozzle (75) connected to an air conditioning duct (70).

15. Aircraft according to any one of Claims 1 to 14, **characterised in that** said aircraft (1) comprises at least one flight instrument (100) arranged on the central control pedestal (15).

16. Aircraft according to any one of Claims 1 to 15, **characterised in that** each display means (21, 22) comprises at least two independent screens (23, 24).

17. Method for optimising the outer visibility offered to a passenger of an aircraft (1) provided with a cockpit (2) extending longitudinally from a rear portion (6) to a front portion (5) and transversely from a left side (3) to a right side (4) and in elevation from a base (7) to a top (8), said cockpit (2) comprising a canopy including transparent surfaces (11) connected to one another by posts (13, 14), said cockpit (2) including a central control pedestal (15) and two seats (16, 17) arranged transversely on either side of the central control pedestal (15), said posts (13, 14) comprising at least one transverse post (14) extending transversely in a direction from the left side (3) to the right side (4), **characterised in that**:
- in the cockpit (2), at least one support member (31, 32, 33, 34) is arranged, connected to the central control pedestal (15), each support member (31, 32, 33, 34) being positioned between one of said posts (13, 14) and a theoretical position of the eye of a passenger sitting on one of said two seats (16, 17), in order to optimise the outer visibility offered to this passenger, the theoretical position being defined by the manufacturer, said support members include at least one transverse support member (31, 32) at least partially concealing said transverse post (14), at least two planar transverse support members (31, 32) jointly forming a V-shaped plate (35),
- a display means (21, 22) is suspended from at least one support member (31, 32, 33, 34) in order to display various information to aid piloting.
